# FASCICULE DE BREVET EUROPEEN

(11) **EP 3 688 926 B1**
(45) Date de publication et mention de la délivrance du brevet: **10.01.2024**
(21) Numéro de dépôt: 18804359.0
(22) Date de dépôt: 28.09.2018
(51) Int. Cl.: H04W 4/08, H04W 4/70, H04W 12/0433, H04L 9/08, H04L 9/40

(54) **GESTION DE GROUPES D'OBJETS CONNECTÉS UTILISANT DES PROTOCOLES DE COMMUNICATION SANS FIL**
VERWALTUNG VON GRUPPEN VERBUNDENER OBJEKTE MITTELS DRAHTLOSER KOMMUNIKATIONSPROTOKOLLE
MANAGEMENT OF GROUPS OF CONNECTED OBJECTS USING WIRELESS COMMUNICATION PROTOCOLS

(30) Priorité: 28.09.2017 FR 1759043
(43) Date de publication de la demande: 05.08.2020
(73) Titulaire: Orange, 92130 Issy-les-Moulineaux (FR)
(72) Inventeur: GRUPELI, Franck, 92326 Châtillon Cedex (FR); MICHEL, Philippe, 92326 Châtillon Cedex (FR); MANGON, Stéphane, 92326 Châtillon Cedex (FR)
(86) Numéro de dépôt international: PCT/FR2018/052390
(87) Numéro de publication internationale: WO 2019/063950

(56) Documents cités:
- WO-A2-2012/104725

## Description

### Domaine technique

L'invention se rapporte au domaine général des réseaux de télécommunication et plus particulièrement à l'Internet des objets.

### Etat de la technique

Depuis maintenant quelques années, l'Internet des Objets - ou IoT pour *Internet of Things* - se déploie dans le milieu du grand public et dans le monde professionnel. Les objets connectés sont par exemple des objets domestiques comme des ampoules, des lampes, des radiateurs ou encore des appareils audio, vidéo, des compteurs d'électricité, des véhicules, des systèmes d'arrosage, etc. Les objets connectés dialoguent entre eux via plusieurs catégories de réseaux :
- les réseaux de télécommunication filaires, appartenant aux opérateurs traditionnels, qui proposent des technologies de connexion haut débit et longue distance, appelés dans la suite WAN (Wide Area Network) ;
- les réseaux radios sans fil, divisés eux-mêmes en différentes catégories :
   - Les technologies de longue portée à haut débit, de type protocoles mobiles (2G, 3G, 4G, etc.), appartenant aux opérateurs de télécommunication, longue distance, ou encore à bas débit comme par exemple LoRa (de l'anglais *Long Range Wide-area*)*,* ou Sigfox (un réseau cellulaire à bas débit) ;
   - Les technologies de moyenne portée de type Z-Wave, Wi-Fi, etc.
   - Les technologies de courte portée, de type NFC (Near Field Communication), Bluetooth, BLE, Zigbee, etc.
- en plus de ces protocoles radio, certains réseaux lumineux (Li-Fi) voire sonores, équivalents à des protocoles non filaires, peuvent également être utilisés.

Nous nous intéressons plus particulièrement dans la suite aux réseaux sans fil.

Au sein d'un même réseau, tous les objets n'ont pas les mêmes fonctions : certains proposent de remonter des résultats de mesure (capteurs de température, d'humidité, de mouvement, etc.), d'autres offrent des fonctions de communication (smartphones, tablettes, etc.), d'autres encore de stockage de données, etc. Un même objet peut par ailleurs offrir plusieurs fonctions : une serrure connectée peut se verrouiller ou se déverrouiller mais aussi émettre un message d'alarme, renseigner sur la température, etc.

Ces objets ont besoin de dialoguer entre eux de façon sécurisée mais aussi cohérente : dans un hôpital par exemple, la remontée d'une information concernant les données de santé d'un patient est d'une part confidentielle, c'est-à-dire qu'elle nécessite une communication sécurisée, et d'autre part n'a de sens que pour les objets ayant vocation à traiter ces données, c'est-à-dire qui partagent la fonction « données de soin du patient ». Une borne destinée aux pompiers ou le four de la cafétéria n'ayant que faire de ces informations, il n'est pas cohérent de les leur transmettre, bien que ces objets connectés se trouvent dans le périmètre du réseau local de l'hôpital. Selon un autre exemple, si un bébé est volé dans l'enceinte de l'hôpital, il est judicieux que les portes se ferment mais il est inutile que les alarmes à incendie se déclenchent. Il existe donc un besoin pour une communication cohérente entre les objets connectés.

Cependant de manière générale, les réseaux locaux, en particulier sans fils, fonctionnent en mode diffusé, c'est-à-dire que tous les objets dans le réseau local sont à même de recevoir un message (comportant selon un exemple précédent les données confidentielles d'un patient), voire de le traiter, éventuellement à des fins frauduleuses, s'il n'est pas chiffré.

Il existe aujourd'hui des solutions pour que de tels objets dialoguent entre eux de manière sécurisée. Par exemple les réseaux LoRa et Sigfox susmentionnés permettent de tels échanges via leurs serveurs protocolaires (LoRa, LTEM). A l'intérieur d'un réseau local, il est également possible de faire dialoguer des objets entre eux de façon sécurisée (par exemple sur un lien BLE - Bluetooth Low Energy, ou par l'intermédiaire de la passerelle de service). Le document WO2012104725 décrit des systèmes et procédés pour itinérance audio pour dispositifs mobiles, serveur d'informations de groupe parmi des dispositifs mobiles, et définition de groupe d'utilisateurs avec des dispositifs mobiles.

Cependant, ces méthodes ne permettent pas de prendre en compte les différentes fonctions des objets d'un réseau local de manière à ce que ceux-ci dialoguent entre eux de manière cohérente.

L'invention offre une solution ne présentant pas les inconvénients de l'état de la technique.

### L'invention

A cet effet, selon un aspect fonctionnel, l'invention a pour objet un procédé de gestion d'un groupe d'objets, dits objets clients, dans un réseau de communications comprenant au moins un réseau local, ledit procédé étant caractérisé en ce qu'il comporte les étapes suivantes :
- affectation au groupe d'au moins un objet connecté en fonction d'au moins un attribut fonctionnel dudit objet connecté;
- chiffrement d'une clé de chiffrement du groupe pour ledit groupe à l'aide d'une clé de chiffrement de l'objet;
- transmission audit au moins un objet connecté :
- d'un identifiant du groupe,
- et de la clé de chiffrement du groupe chiffrée.

Par « attribut fonctionnel », on entend ici un attribut de l'objet, par exemple l'aptitude à gérer des flux multimédia, à fournir une température, une alarme, etc. Une liste d'attributs fonctionnels peut être prédéfinie au niveau du réseau local, ou normalisée par un organisme de normalisation, etc.

Ainsi, l'invention permet de regrouper des objets au sein du réseau local selon un critère fonctionnel. Il est possible de constituer par exemple un premier groupe d'objets « média », un second groupe d'objets « capteurs », un troisième dit « données du patient », etc. Comme chaque objet du groupe reçoit une clé de groupe spécifique au groupe, qu'il est seul apte à déchiffrer grâce à sa clé de chiffrement objet unique, il est ainsi possible de limiter la communication des messages aux objets de ce groupe, qui seront les seuls à pouvoir, grâce à la clé de groupe, déchiffrer les messages transmis ultérieurement sur le réseau local. On évite ainsi de manière simple que des messages confidentiels soient interceptés et déchiffrés par des objets qui ne font pas partie du groupe. Un objet ne faisant pas partie du groupe ne possède pas la clé du groupe et même s'il parvient à l'intercepter, il ne peut pas la déchiffrer. Ceci permet une communication sécurisée et cohérente entre les objets du réseau local, regroupés selon leurs fonctions.

Selon un mode de mise en oeuvre particulier de l'invention, un procédé tel que décrit ci-dessus est en outre caractérisé en ce que l'étape d'affectation au groupe dudit au moins un objet connecté est fonction d'au moins une fonction du groupe.

Ce mode de mise en oeuvre de l'invention permet de construire très simplement un groupe de discussion : si les fonctions de l'objet sont compatibles avec celles du groupe, alors l'objet est affecté au groupe, c'est-à-dire qu'il fait partie du groupe. Cette opération peut être effectuée lors de l'initialisation de l'objet, ou plus tardivement après la création du groupe. La comparaison peut prendre diverses formes. L'équivalence entre les fonctions n'est en effet pas forcément stricte : si l'objet est par exemple un disque dur, l'une de ses fonctions est implicitement le stockage et il peut être de ce fait affecté à un groupe de stockage. Une autre de ses fonctions est le stockage des médias et il peut être associé de ce fait à un groupe de gestion des médias, etc. L'équivalence des fonctions doit simplement être connue du réseau local lors de la constitution du groupe.

Selon un autre mode de mise en oeuvre particulier de l'invention, qui pourra être mis en oeuvre alternativement ou cumulativement avec le précédent, le procédé de gestion d'un groupe est en outre caractérisé en ce que le réseau local comprend un objet connecté de type serveur, dit objet serveur, apte à générer et mémoriser la clé du groupe.

Avantageusement selon ce mode, la formation des groupes est confiée à un objet privilégié du réseau local, dit objet serveur, qui se charge de la gestion du groupe, et notamment de celle de la clé du groupe qui servira ultérieurement à autoriser la discussion entre deux objets du même groupe. Ceci simplifie la gestion du groupe. L'objet serveur peut naturellement être lui-même un objet client.

Selon une variante de ce mode de mise en oeuvre particulier de l'invention, le procédé de gestion d'un groupe est en outre caractérisé en ce que le réseau de communications comprend au moins deux réseaux locaux et en ce qu'un premier objet serveur d'un premier réseau local est apte à communiquer avec un second objet serveur d'un second réseau local et le procédé comporte les étapes suivantes:
- établissement d'une communication entre le premier et le second objets serveurs ;
- réception, par le second objet serveur, d'une clé de chiffrement chiffrée et de l'identifiant d'un groupe du premier objet serveur ;
- communication de données entre le premier objet serveur et le second objet serveur pour établir une communication sécurisée entre un premier objet du premier réseau local et un second objet du second réseau local.

Avantageusement selon cette variante, le groupe peut être étendu à l'extérieur du réseau local, par simple échange de la clé de groupe d'un premier objet serveur d'un premier réseau local avec un second objet serveur d'un second réseau local. Ainsi le second serveur peut-il, par distribution de cette clé aux objets appropriés de son réseau local, autoriser une communication inter-réseaux entre des objets de même fonction.

Selon un autre mode de mise en oeuvre particulier de l'invention, qui pourra être mis en oeuvre alternativement ou cumulativement avec les précédents, le procédé de gestion d'un groupe est en outre caractérisé en ce que chaque objet client du réseau local appartient au moins à un groupe d'objets.

Avantageusement selon ce mode, chacun des objets du réseau local est apte à communiquer avec un ou plusieurs autres objets du même groupe, et chaque objet peut appartenir à plusieurs groupes de discussion.

Selon un autre mode de mise en oeuvre particulier de l'invention, qui pourra être mis en oeuvre alternativement ou cumulativement avec les précédents, le procédé de gestion d'un groupe est en outre caractérisé en ce que le réseau local comporte un groupe par défaut et tous les objets du réseau local sont affectés audit groupe par défaut.

Avantageusement selon ce mode, chacun des objets du réseau local est apte à communiquer avec au moins les autres objets du réseau local de manière sécurisée, indépendamment de l'affectation ultérieure des objets dans un autre groupe de discussion. Le groupe par défaut est le groupe du réseau local.

Selon un autre aspect fonctionnel, l'invention concerne un procédé de communication dans un groupe d'au moins un objet connecté, dit objet client, dans un réseau de communications, ledit procédé étant caractérisé en ce qu'il comporte les étapes suivantes sur un objet client :
- réception d'un identifiant d'un groupe associé à au moins une fonction dudit objet client et d'une clé de chiffrement du groupe chiffrée ;
- déchiffrement de la clé de chiffrement du groupe chiffrée, à l'aide d'une clé de chiffrement de l'objet client;
- chiffrage d'un message et/ou déchiffrement d'un message chiffré reçu, à l'aide de la clé de chiffrement du groupe déchiffrée.

Selon un aspect matériel, l'invention concerne également un objet serveur pour la formation d'un groupe d'au moins un objet connecté, dits objet client, dans un réseau de communications comprenant au moins un réseau local, ledit objet serveur étant caractérisé en ce qu'il comporte les modules suivants :
- un module d'affectation au groupe d'au moins un objet connecté en fonction d'au moins un attribut fonctionnel dudit objet connecté ;
- un module de chiffrement d'une clé de chiffrement du groupe pour ledit groupe à l'aide de d'une clé de chiffrement de l'objet
- un module de transmission audit au moins un objet connecté
- d'un identifiant du groupe,
- et de la clé de chiffrement du groupe chiffrée .

Selon un autre aspect matériel, l'invention concerne également un objet client d'un réseau de communication, ledit objet étant caractérisé en ce qu'il comporte les modules suivants :
- un module de réception d'un identifiant d'un groupe associé à au moins une fonction dudit objet et d'une clé de chiffrement du groupe;
- un module de déchiffrement d'une clé de chiffrement du groupe à l'aide de la clé de chiffrement de l'objet ;
- un module de chiffrement d'un message et/ou de déchiffrement d'un message reçu chiffré, à l'aide de la clé de chiffrement du groupe déchiffrée.

Le terme module utilisé dans la présente description peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.)

Selon un autre aspect matériel, l'invention concerne également une passerelle domestique comprenant objet serveur tel que décrit auparavant.

Selon un autre aspect matériel, l'invention concerne également un système comportant un objet serveur et au moins un objet client tels que décrits auparavant.

Selon un autre aspect matériel, l'invention concerne encore un programme d'ordinateur apte à être mis en oeuvre sur objet tel que décrit ci-dessus, le programme comprenant des instructions de code qui, lorsque le programme est exécuté par un processeur, réalise les étapes du procédé de gestion et/ou du procédé de communication définis au-dessus.

Selon encore un autre aspect matériel, l'invention a trait à un support d'enregistrement lisible par un processeur de données sur lequel est enregistré un programme comprenant des instructions de code de programme pour l'exécution des étapes de l'un quelconque des procédés définis ci-dessus.

Les objets selon les aspects matériels de l'invention procurent au moins les mêmes avantages que ceux procurés par le procédé selon le premier aspect fonctionnel. Les caractéristiques optionnelles évoquées pour le premier aspect peuvent s'appliquer aux aspects matériels.

L'invention sera mieux comprise à la lecture de la description qui suit, donnée à titre d'exemple et faite en référence aux dessins annexés.

### Les figures:

La figure 1 représente le contexte général de l'invention.
La figure 2 représente un exemple de regroupement d'objets connectés selon un mode de réalisation de l'invention.
La figure 3 représente une architecture d'un objet implémentant un mode de réalisation de l'invention.
La figure 4 représente un chronogramme de fonctionnement général selon un mode de réalisation de l'invention.
La figure 5 représente un chronogramme de l'initialisation d'un objet serveur selon un mode de mise en oeuvre de l'invention.
La figure 6 représente un chronogramme de l'initialisation d'un objet client selon un mode de mise en oeuvre de l'invention, ainsi que l'affectation d'un groupe à un objet client selon un mode de mise en oeuvre de l'invention.

### Description détaillée d'un exemple de réalisation illustrant l'invention

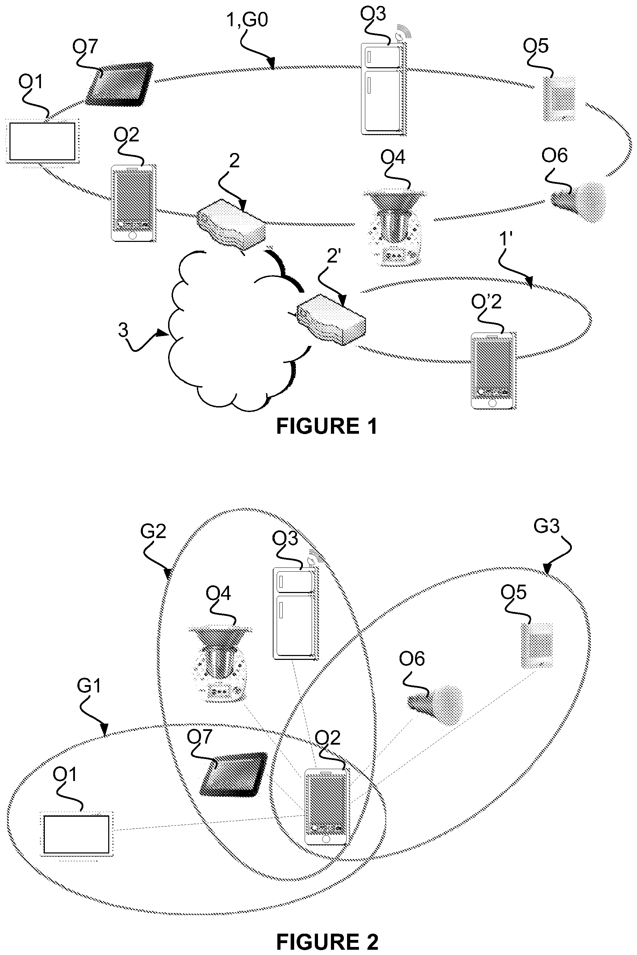

La figure 1 représente le contexte général de l'invention selon l'état de l'art, dans lequel un système de télécommunication comporte un premier réseau local ou LAN (Local Area Network) 1, un second réseau local (1') et un réseau de type étendu, ou WAN (Wide Area Network), 3. Selon cet exemple non limitatif, les réseaux LAN sont des réseaux domestique et le réseau WAN est un réseau Internet. Plus largement, un réseau LAN pourrait être un réseau d'entreprise et le réseau WAN 3 pourrait être de n'importe quel type (cellulaire, GSM - Global System for Mobile Communications, UMTS - Universal Mobile Télécommunications System, Wifi - Wireless, etc.) sans sortir du cadre de l'invention.

Un élément de gestion du réseau (2) (une passerelle résidentielle, professionnelle, un hub, etc.) et des équipements terminaux, appelés dans la suite objets connectés ou plus simplement objets (01-07) sont connectés sur le réseau local 1. Il s'agit respectivement selon l'exemple d'un ordinateur personnel PC (O1), d'un smartphone (02), d'un réfrigérateur connecté (O3), d'un robot ménager (O4), d'un détecteur de mouvement (O5), d'une lampe (O6) et d'une tablette numérique (O7). Ces objets sont aptes à communiquer sur le réseau local et peuvent être accédés de l'intérieur ou de l'extérieur du réseau local via la passerelle de service (2). On notera que ces terminaux sont de nature hétérogène. Ils peuvent, par exemple, différer par :
- leur système d'exploitation (Windows, Linux, Android, etc.) ;
- leur type de connexion au réseau (Ethernet, Wifi, Bluetooth, etc.) ;
- les actions dont ils sont capables (mesurer la température, communiquer sur des réseaux sociaux, mettre en oeuvre une recette de cuisine, lire un contenu multimédia, détecter un mouvement, allumer une lampe, etc.) C'est ce qu'on appelle la *fonction* de l'objet. On notera que cette *fonction* peut être très simple (mesurer la température) ou correspondre à un scénario complet (mettre en oeuvre une suite d'actions sur divers objets pour paramétrer le domicile lorsque l'utilisateur rentre à la maison).

Le réseau local (1') schématisé à titre d'exemple est piloté par une passerelle résidentielle 2' et comporte un objet connecté O'2.

On va maintenant décrire l'invention, dont le but est d'offrir une communication sécurisée entre objets connectés du premier réseau local (1) et/ou du second réseau local (1') à l'appui des figures suivantes.

La figure 2 représente un exemple de regroupement d'objets connectés selon un mode de réalisation de l'invention. Le contexte est le même que celui de la figure 1 mais les objets du premier réseau local ont été regroupés selon les fonctions qu'ils peuvent rendre. On aboutit selon cet exemple à une architecture selon laquelle la même fonction peut être partagée par plusieurs objets dans un groupe, dit aussi « groupe de discussion ». Chaque groupe de discussion offre un espace virtuel de discussion sécurisée grâce à une clé de chiffrement dédiée. Sur l'exemple de la figure 2, ces groupes sont au nombre de trois :
1. le groupe G1 des objets personnels de fonction « média » (PC O1, tablette O7, smartphone O2) ; ces objets sont notamment aptes à stocker et/ou traiter des contenus multimédia.
2. le groupe G2 des équipements connectés de la maison capables de servir à la cuisine (réfrigérateur O3 et robot O4, tablette O7, smartphone O2) ; ces objets sont notamment aptes à obtenir et/ou traiter une recette de cuisine et possèdent en attribut la fonction « cuisine ».
3. le groupe G3 des objets susceptibles de répondre à l'arrivée de l'utilisateur dans son foyer (détecteur de mouvement O5, lampe O6 et smartphone O2). Ils possèdent en attribut la fonction « présence_maison ».

On notera par ailleurs que :
- un premier groupe (non représenté car implicite) est le groupe du réseau local par défaut : tous les objets appartiennent à ce groupe et chaque objet peut dialoguer avec n'importe quel autre objet du réseau local. Ce groupe est noté dans la suite G0.
- l'objet O7 (tablette numérique) possède l'attribut « média » mais sert aussi à la cuisine et fait donc partie des groupes G1 et G3 ; de manière générale, un même objet, s'il possède plusieurs fonctions, pourra communiquer sur plusieurs groupes.
- l'objet O2 (smartphone) a un rôle particulier : il peut piloter tous les autres objets. Il se comporte comme un objet « serveur » ou possède un dispositif remplissant cette fonction et, préférentiellement, fait partie de tous les groupes (G0, G1, G2, G3). Au sein du réseau local d'objets, on considère en effet dans la suite deux types d'objets :
   - Les objets serveurs (OS): ces objets permettent l'administration des droits et des groupes de discussion sécurisés. Ils ont notamment la charge de distribuer les clés de sécurité qui vont permettre aux objets des différents groupes de dialoguer de manière sécurisée et cohérente. Ces objets serveurs peuvent être des passerelles, smartphones, etc. comme dans l'exemple de la figure 2, ou tout objet ayant suffisamment de capacités de mémoire et de calcul pour gérer les groupes de discussion et les clés associées (génération, distribution, cycle de vie des clés, etc.) Les objets serveurs peuvent être des objets indépendants ou se résumer à un simple module logiciel ou matériel sur l'un des objets du réseau local. De préférence dans la suite, les objets serveurs sont autonomes et possèdent un élément de sécurité afin de stocker certaines clés de chiffrement et éventuellement chiffrer/déchiffrer les messages.
   - Les objets clients (Oi) : comme discuté auparavant, ces objets connectés ont un ou plusieurs rôles fonctionnels, ou fonctions, au sein du réseau local, en tant qu'émetteur et/ou récepteur et possèdent des capacités de calcul afin de chiffrer et déchiffrer les messages. Ils font partie d'un ou plusieurs groupes de discussion, sous contrôle de l'objet serveur. Ils possèdent de préférence un élément de sécurité pour stocker les clés de diffusion.

Grâce à cette architecture, chaque objet d'un groupe possède les moyens de dialoguer de façon sécurisée avec les objets du même groupe, sans que les autres puissent intercepter et déchiffrer les messages

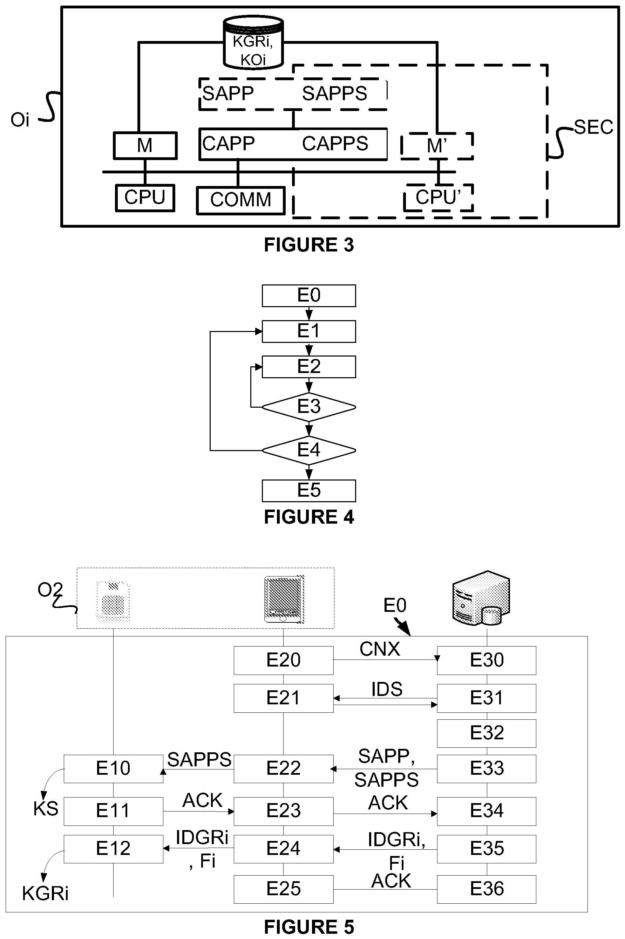

La figure 3 représente une architecture d'un objet qui implémente un mode de réalisation de l'invention. Il s'agit selon cet exemple, conformément à la figure 2, de l'un des objets du réseau local, soit un objet client (01-07) soit un objet serveur (O2).

On notera que l'objet serveur peut prendre plusieurs formes :
- objet physique dédié ;
- objet quelconque possédant un module serveur, et de ce fait apte à remplir les fonctions de l'objet serveur ;
- carte électronique jouant le rôle d'une carte mère d'ordinateur, c'est-à-dire offrant toutes les fonctions de base d'un ordinateur à un prix modeste (une carte Raspberry Pi ^{©} de la fondation du même nom peut jouer ce rôle) ;
- module de la passerelle domestique, en particulier dans le contexte d'un réseau local d'entreprise ;
- etc.

L'objet connecté (client et/ou serveur) comprend :
- des mémoires (M) associées à un processeur (CPU). Les mémoires peuvent être de type ROM (de l'anglais *Read On*/*y Memory*) ou RAM (de l'anglais *Random Access Memory*). Elles peuvent prendre la forme d'une carte amovible (SD, flash, etc.). Une partie de la mémoire M contient notamment, selon l'invention, la partie logicielle CAPP de l'objet client. Si l'objet dispose d'un module serveur, il contient aussi une application notée SAPP dédiée à la fonction serveur. Elle contient aussi un certain nombre de clés de chiffrement
   - dans le cas d'un l'objet serveur, la clé de l'objet (serveur, Ks) et les clés des différents objets et groupes gérés par l'objet serveur ; par exemple, si l'objet serveur administre 100 objets répartis en 10 groupes, la mémoire M doit stocker 110 clés :
      i. 10 clés de groupe notées KGRi (i variant de 1 à 10).
      ii. 100 clés d'objets notées KOi (i variant de 1 à 100).
   - dans le cas d'un l'objet client, la clé de l'objet (KOi) et les clés des différents groupes auxquels appartient l'objet ; par exemple, si l'objet i appartient à 2 groupes, la mémoire M doit stocker la clé de l'objet KOi et 2 clés de groupe notées KGRi.
- selon un mode préféré de réalisation, un élément de sécurité (SEC) comportant lui-même un processeur (CPU') et des mémoires (M'). Cet élément de sécurité peut être matériel (carte à puce, etc) ou logiciel (White box, Trusted Execution Environment, etc.). Il sert notamment à stocker la partie logicielle dite « sécurisée » CAPPS de l'objet client et si l'objet dispose d'un module serveur, il contient aussi une application notée SAPPS. Il sert aussi à stocker un certain nombre de clés, chiffrer/déchiffrer les messages, et effectuer les calculs adéquats de manière sécurisée. Les clés stockées préférentiellement dans l'élément de sécurité sont :
   - dans le cas d'un l'objet client, les clés de chiffrement de l'objet i (Clé Client KOi) et des groupes (clé de groupe KGRi) auxquels il appartient ;
   - dans le cas d'un objet serveur, la clé de chiffrement du serveur (Ks), les clés de chiffrement des objets (clés clients KOi) et des groupes (clés de groupe KGRi) du réseau local.

Cependant certains objets très simples peuvent être dépourvus d'éléments de sécurité, les clés résidant alors dans une mémoire non sécurisée. Une partie de la mémoire M peut contenir dans ce cas une partie de l'application CAPP(S) (sous forme d'applet par exemple) ainsi qu'éventuellement une partie de l'application serveur SAPP(S).
- un module de communication (COMM), de préférence sans fils, pour la communication avec les autres objets du réseau local ; ce module peut être de type WiFI, Bluetooth, etc.

Un exemple de tables en mémoire de l'objet client et/ou serveur est donné à titre indicatif ci-dessous pour correspondre à l'exemple de la figure 2. Naturellement, toute autre implémentation à la portée de l'homme du métier pourrait être envisagée alternativement.
• Une première table TCL en mémoire de l'objet serveur contient toutes les références des objets gérés par l'objet serveur. Il peut s'agir plus généralement de la table des objets du réseau local. Elle peut se trouver répartie sur plusieurs objets serveurs (s'il y en a plusieurs dans le réseau local) ou centralisée sur un seul objet serveur (par exemple la passerelle de service). Selon cet exemple :
∘ la colonne 1 comprend un identifiant unique IDi de l'objet i ;
∘ la colonne 2 comprend la clé de chiffrement KOi de l'objet i ;
∘ La colonne 3 indique la ou les fonctions que peut rendre l'objet, selon cet exemple F1 (fonction « média »), F2 (fonction « cuisine ») et/ou F3 (fonction « présence_maison) ;
∘ la colonne 4 indique la référence du ou des groupes Gi auquel est associé l'objet ;
∘ la colonne 5 indique la clé de groupe KGRi.

**Exemple de table TCL des objets clients du réseau local.**

| **Id objet (IDi)** | **Clé objet (KOi)** | **Fonction(s) objet (Fi)** | **Reférence Groupe(s)** | **Clé de qroupe (s)** |
|---|---|---|---|---|
| IDCL1= O1 | KO1=123456 | F1 | G1 | KGR1 |
| O2 | KO2=7891011 | F1, F2, F3 | All | All |
| O3 | KO3 =... | F2 | G2 | KGR2 |
| O4 | KO4 | F2 | G2 | KGR2 |
| O5 | KO5 | F3 | G3 | KGR3 |
| O6 | KO6 | F3 | G3 | KGR3 |
| O7 | KO7 | F1, F2 | G1, G2 | KGR1, KGR2 |

• Une seconde table TGR (table des groupes) en mémoire de l'objet serveur contient toutes les références des groupes gérés par l'objet serveur :

**Exemple de table TGR des groupes du réseau local**

| **Id groupe (IDGRi)** | **ID serveur (IDS)** | **Clé groupe (KGRi)** | **Fonction groupe (Fi)** | **Id. clients (IDi)** |
|---|---|---|---|---|
| G1 | O2 | KGR1=Fh12m3456 | F1 | O1, O7, [O2] |
| G2 | O2 | KGR2=... | F2 | O3, O4, O7 [O2] |
| G3 | O2 | KGR3=W2222h | F3 | O5, O6, [O2] |

• chaque objet client contient une table Ti mémorisant sa clé, son (ses) objet(s) serveur(s) et la référence des groupes auxquels il appartient :

**Exemple de table T7 de l'objet 07**

| **Id objet (IDi)** | **Clé objet (KOi)** | **Fonction(s) objet (Fi)** | **Référence(s) Groupe(s)** | **Clé(s) de groupe(s)** |
|---|---|---|---|---|
| O7 | KO7 | F1, F2 | G1, G2 | KGR1, KGR2 |

La figure 4 représente un chronogramme de fonctionnement général selon un mode de réalisation de l'invention.

Lors d'une étape E0, l'objet serveur est initialisé. Cette étape sera décrite par la suite à l'appui de la figure 5.

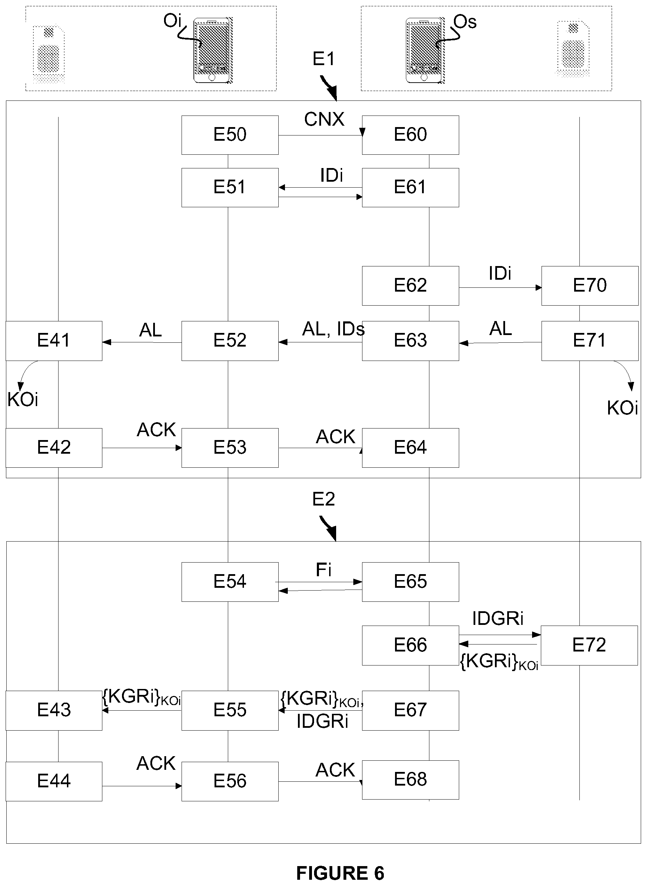

Lors de l'étape E1, un objet client i du réseau local est initialisé, et lors de l'étape E2, un groupe lui est affecté. Ces étapes seront décrite par la suite à l'appui de la figure 6.

L'étape E3 consiste à vérifier s'il reste des groupes à affecter à l'objet, notamment dans le cas où l'objet est capable de rendre plusieurs fonctions et peut donc faire partie de plusieurs groupes. Dans l'affirmative, et tant qu'il reste des groupes à affecter, l'étape E2 est effectuée de nouveau.

L'étape E4 consiste à vérifier s'il reste des objets clients à initialiser. Dans l'affirmative, et tant qu'il reste des objets à initialiser, l'étape E1 est effectuée de nouveau.

Dans la négative, on passe à l'étape E5 au cours de laquelle deux objets d'un même groupe peuvent entamer une communication : le premier objet diffuse un message sur le réseau local, et ce message est reçu et peut être déchiffré et lu par tous les objets qui appartiennent au même groupe.

La figure 5 représente un chronogramme de l'initialisation d'un objet serveur (ici, O2) selon un mode de mise en oeuvre de l'invention, c'est-à-dire une description détaillée de l'étape E0 de la figure précédente.

Lors d'une étape E20, l'objet client (potentiellement serveur) se connecte pour la première fois sur le réseau local.

La demande de connexion est reçue lors d'une étape E30 par le serveur d'administration du réseau local, qui peut prendre par exemple la forme d'un module logiciel sur la passerelle domestique, ou sur un PC du réseau local, etc.

Selon une variante, l'objet peut être initialisé lors de sa fabrication, dans le cas où son rôle est déjà connu (objet client ou serveur).

Puis lors d'une étape E31, le serveur d'administration demande à l'objet son identifiant unique (IDS) et le reçoit en réponse. L'identifiant unique, IDS, est stocké par exemple dans la mémoire M de l'objet serveur et transmise au serveur d'administration lors d'une étape E21.

Lors d'une étape E32 suivante, le rôle d'objet serveur est attribué à l'objet. Cette attribution peut être déclenchée parce que l'objet a demandé ce rôle lors de sa connexion, ou parce que l'objet est le premier à se connecter, ou parce que l'objet possède une caractéristique particulière liée par exemple à sa fonction (*smartphone,* apte à piloter l'ensemble des objets connectés du réseau, PC, etc.), etc.

A l'issue de cette étape, l'application serveur peut être transférée à l'objet (E33, E22), par exemple sous forme de téléchargement. On rappelle que l'application SAPP de l'objet comporte de manière préférentielle une partie sécurisée, par exemple une applet, SAPPS, destinée à être installée dans une mémoire/zone sécurisée de l'objet, ici lors d'une étape E10. Cette mémoire peut être matérielle ou logicielle. L'application SAPP comporte au moins un module de stockage et un module de gestion des communications sur le réseau. L'application SAPPS comporte pour sa part un module de sécurité dédié à la gestion des clés (génération, distribution, stockage, chiffrement etc.)

Une fois l'application installée lors des étapes E22 et E10, la clé » KS de chiffrement du serveur peut être préférentiellement générée et stockée dans la mémoire sécurisée.

Puis un acquittement peut être transmis vers le module d'administrations (étapes E11 et E23).

Au cours d'une étape E35, le module d'administration requiert la génération d'une ou plusieurs clés de groupes KGRi. Selon un premier exemple, ces groupes sont connus de l'outil d'administration qui les transmet à l'objet serveur avec les fonctions associées. Par exemple la requête peut consister à transmettre à l'objet serveur un identifiant IDGR1 de groupe G1 à associer aux objets « media », et la fonction associée est notée F1, puis un identifiant IDGR2 de groupe G2, etc. Pour chaque groupe, l'objet serveur génère une clé de chiffrement KGRi lors d'une étape E24/E12. Préférentiellement, l'objet serveur demande à son module de sécurité de générer et stocker une clé (KGRi) pour chacun des groupes lors d'une étape E12. Elles peuvent être éventuellement retransmises au module d'administration. A l'issue de cette étape, un acquittement peut être transmis au module d'administration (E25).

L'objet serveur est initialisé et dispose donc :
- de l'applicatif serveur (SAPP+SAPPS) dont une partie peut se trouver dans l'élément de sécurité s'il en dispose ;
- d'un identifiant d'objet serveur (IDS), par exemple une référence numérique encodée sur 8 octets ;
- de la clé de chiffrement de l'objet serveur (Clé serveur Ks) dans la mémoire sécurisée ;
- des identifiants de groupes (IDGRi) associés (ou à associer ultérieurement) à des « fonctions » Fi d'objets à regrouper dans des groupes Gi (« média », « cuisine », « présence_maison », etc.) ; ces identifiants de groupes peuvent être :
   - normalisés ; si une même fonction peut être partagée en différents réseaux locaux (par exemple, des objets traitant des données patients dans les hôpitaux, des machines de fonction commune dans des sites industriels différents, etc.) elle sera de préférence normalisée dans un organisme adéquat. Ils peuvent dans ce cas être préinstallés dans l'objet (en production, en magasin, etc.), et/ou évoluer au cours du temps selon les besoins de l'administrateur d'un réseau local. On parle dans ce cas de groupe « normalisé ».
   - librement définis par l'utilisateur (ou administrateur d'un réseau local) : si une fonction est spécifique aux souhaits de l'utilisateur, il peut lui-même définir ses groupes (objets média, objets pour la cuisine, etc.). Il devra pour cela inscrire les groupes dans la mémoire du module serveur, par exemple via une interface homme-machine appropriée, ou via le réseau local ou étendu (par mise à jour du *firmware* de l'objet, etc.). On parle dans ce cas de groupe « libre ».
- des clés de chiffrement (KGRi) pour les différents groupes (Gi). Plusieurs cas peuvent se présenter. On notera que la gestion du cycle de vie des clés est donc à prévoir dans chaque cas mais se trouve en dehors de la portée de la présente invention.
   i. si le groupe a une clé identique dans différents réseaux locaux (par exemple, plusieurs hôpitaux), la clé de groupe peut être préinstallée en production (et évoluer par la suite selon les besoins) ;
   ii. si les clés, bien que correspondant à la même fonction, sont différentes dans les différents réseaux locaux, par exemple dans le cas de réseaux locaux industriels d'activités similaires appartenant à des sociétés différentes, elles peuvent être installées (ou mises à jour) à l'initialisation de l'objet serveur dans le réseau local.
   iii. si les clés sont propres au réseau local, notamment dans le cas d'un groupe « libre », leur cycle de vie dépend des choix de l'utilisateur (elles peuvent être par exemple créées et stockées en mémoire de l'objet en même temps que l'identifiant de groupe).

La figure 6 représente un chronogramme de l'initialisation d'un objet client selon un mode de mise en oeuvre de l'invention, ainsi que de l'affectation d'un groupe à un objet client selon un mode de mise en oeuvre de l'invention. Elle représente notamment l'arrivée d'un nouvel objet client dans un groupe de discussion.

On suppose que l'objet client est déjà initialisé lors d'une étape antérieure c'est-à-dire qu'il dispose :
- des « fonctions » Fi de l'objet (« média », « cuisine », « présence_maison », etc.), normalisées ou déterminées par l'utilisateur ;
- d'un identifiant d'objet client, IDi, par exemple une référence numérique encodée sur 8 octets ;
- d'une application CAPP qui a été transférée à l'objet, par exemple sous forme de téléchargement. On rappelle que l'application CAPP de l'objet comporte de manière préférentielle une partie sécurisée, ou applet, CAPPS, destinée à être installée dans une mémoire/zone sécurisée de l'objet. Cette mémoire peut être matérielle ou logicielle. L'application CAPP comporte au moins un module de stockage et un module de gestion des communications sur le réseau. L'application CAPPS comporte pour sa part un module de sécurité dédié à la gestion des clés (génération, distribution, stockage, chiffrement, etc.)

Lors d'une étape E50, l'objet client Oi se connecte pour la première fois sur le réseau local. La demande de connexion est reçue par l'objet serveur Os lors d'une étape E60.

Puis lors d'une étape E61, le serveur demande à l'objet son identifiant unique (IDi) et le reçoit en réponse. Après vérification que le serveur ne connaît pas cet objet, il démarre la procédure d'ajout d'un nouvel objet. L'identifiant unique, IDi, est stocké par exemple dans la mémoire de l'objet serveur et transmise à l'élément de sécurité lors d'une étape E62.

Sur réception de cet identifiant d'un nouvel objet, l'élément de sécurité de l'objet serveur génère un aléa (AL) et une clé de chiffrement KOi pour cet objet (étape E71). La clé KOi est générée sur la base de cet aléa et de l'identifiant unique de l'objet, Idi.

L'aléa est transmis du serveur à l'objet au cours d'une étape E63, ainsi que l'identifiant (IDs) du serveur. Grâce à l'aléa reçu au cours d'une étape E52, et transmis à l'élément de sécurité de l'objet s'il en dispose, l'objet client peut générer au cours d'une étape E41 une clé de chiffrement KOi identique à celle du serveur (sur la base de l'aléa et de l'identifiant unique de l'objet, Idi). Cette clé est stockée de préférence dans une mémoire sécurisée de l'objet.

Un acquittement peut alors être transmis au serveur depuis l'élément de sécurité de l'objet (étapes E42, E53, E64).

A la suite de cette première phase d'initialisation de l'objet, le serveur peut procéder au rattachement de l'objet client à un groupe (étape E2 de la figure 4).

A cet effet, lors des étapes E65-E54, le serveur et l'objet échangent les fonctions de l'objet client. On rappelle que la ou les fonctions Fi associées à l'objet (« média », « cuisine », « présence_maison », etc.) sont normalisées ou non.

Le serveur sélectionne alors, lors d'une étape E66, le groupe Gi auquel doit appartenir l'objet, c'est-à-dire le groupe (ou les groupes) correspondant à la fonction (ou les fonctions). Puis il récupère, lors d'une étape E72, grâce à son élément de sécurité auquel il a transmis l'identifiant du groupe (IDGRi) et de l'objet (IDi), une clé de chiffrement du groupe pour l'objet, c'est-à-dire une clé de groupe KGRi chiffrée par la clé de l'objet (KOi), notée {KGRi}_{KOi}.

L'identifiant de groupe (IDGRi) et la clé de groupe chiffrée ({KGRi}_{KOi}) sont alors transmis à l'objet client lors d'une étape E67. L'identifiant de groupe peut être mémorisé dans l'objet lors d'une étape E55. La clé de groupe peut être stockée de manière préférentielle dans son élément de sécurité (étape E43).

Un acquittement peut alors être retransmis au serveur lors des étapes E44 et E56.

A la suite de cette seconde phase d'affectation, l'objet client Oi dispose donc des identifiants du (des) groupes (IDGRi) associés à des « fonctions » Fi de l'objet (« média », « cuisine », « présence_maison», etc.) et les clés de chiffrement (KGRi) correspondantes.

Par la suite, une communication entre deux objets clients souhaitant dialoguer se déroule de la manière suivante : un message M diffusé sur le réseau local est chiffré par la clé de groupe du groupe de discussion ({M}_{KGRi}) et accompagné de la référence du groupe visé (car les objets clients peuvent appartenir à plusieurs groupes), IDGRi. Un tel message ne pourra être déchiffré que par un objet appartenant au même groupe de discussion, titulaire de la clé de groupe KGRi.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

Notamment, l'invention n'est pas limitée au cadre du réseau local : la notion de groupe peut être appliquée à la communication entre plusieurs réseaux locaux, comme par exemple les réseaux 1 et 1' de la figure 1. Il suffit pour cela d'enregistrer le serveur local (du premier réseau local 1) à un réseau externe (le second réseau local 1'). Après s'être enregistré sur un serveur externe (par exemple l'objet serveur O2'), le serveur local (O2) possède une clef qui lui ouvre le champ de discussion avec un groupe local du serveur externe. Une clé de groupe externe est stockée dans la mémoire de l'objet serveur de la même manière qu'une clé de groupe locale. Grâce à cette clé, le serveur local peut dialoguer avec un groupe du serveur externe : cela permet d'étendre le réseau de façon simple.

## Revendications

1. Procédé de gestion d'un groupe (Gi) d'objets connectés (Oi), dits objets clients, dans un réseau de communications comprenant au moins un réseau local (1), ledit procédé étant **caractérisé en ce qu'**il comporte les étapes suivantes :
- affectation (E2, E65) au groupe (Gi) d'au moins un objet connecté (Oi) en fonction d'au moins un attribut fonctionnel (Fi) dudit objet connecté ;
- chiffrement (E72) d'une clé de chiffrement du groupe (KGRi) pour ledit groupe (Gi) à l'aide d'une clé de chiffrement de l'objet (KOi) ;
- transmission (E67) audit au moins un objet (Oi) connecté :
- d'un identifiant du groupe (IDGRi),
- et de la clé de chiffrement du groupe (KGRi) chiffrée ({KGRi}_{KOi}).

2. Procédé de gestion d'un groupe selon la revendication 1, **caractérisé en ce que** l'affectation (E2) au groupe (Gi) dudit au moins un objet connecté (Oi) est fonction d'au moins une fonction (Fi) du groupe (Gi).

3. Procédé de gestion d'un groupe (Gi) selon la revendication 1, **caractérisé en ce que** le réseau local comprend un objet connecté de type serveur, dit objet serveur, apte à générer et mémoriser (E24) la clé de chiffrement de groupe (KGRi).

4. Procédé de gestion d'un groupe (Gi) selon la revendication 3 **caractérisé en ce que** le réseau de communications comprend au moins deux réseaux locaux (1, 1') et **en ce qu'**un premier objet serveur (O2) d'un premier réseau local (1) est apte à communiquer avec un second objet serveur (O'2) d'un second réseau local (1') et le procédé comporte les étapes suivantes :
• établissement d'une communication entre le premier (O2) et le second (O'2) objets serveurs ;
• réception, par le second objet serveur (O'2), d'une clé de chiffrement (KGRi) chiffrée ({KGRi}_{KOi}) et de l'identifiant d'un groupe (IDGRi) du premier objet serveur (O2);
• communication de données entre le premier objet serveur (O2) et le second objet serveur (O2') pour établir une communication sécurisée entre un premier objet (Oi) du premier réseau local et un second objet (Oi') du second réseau local.

5. Procédé de gestion d'un groupe (Gi) selon la revendication 1, **caractérisé en ce que** les objets client (Oi) du réseau local appartiennent au moins à un groupe (G0, Gi) d'objets.

6. Procédé de gestion d'un groupe (Gi) selon la revendication 1, **caractérisé en ce que** les objets clients du réseau local sont affectés à un groupe par défaut (G0) dudit réseau local.

7. Procédé de communication dans un groupe d'au moins un objet connecté (Oi), dit objet client, dans un réseau de communications, ledit procédé étant **caractérisé en ce qu'**il comporte les étapes suivantes sur un objet client (Oi):
- réception (E55) d'un identifiant d'un groupe (IDGRi) associé à au moins une fonction (Fi) dudit objet client et d'une clé de chiffrement du groupe chiffrée ;
- déchiffrement (E43) de la clé (KGRi) de chiffrement du groupe chiffrée, à l'aide d'une clé de chiffrement de l'objet client (KOi) ;
- chiffrage d'un message et/ou déchiffrement d'un message (M) chiffré reçu, à l'aide de la clé (KGRi) de chiffrement du groupe déchiffrée.

8. Objet serveur (O2) pour la formation d'un groupe (Gi) d'au moins un objet connecté, dits objet client, dans un réseau de communications (1,3) comprenant au moins un réseau local, ledit objet serveur étant **caractérisé en ce qu'**il comporte les modules suivants :
- un module d'affectation (SAPP(S)) au groupe (Gi) d'au moins un objet connecté (Oi) en fonction d'au moins un attribut fonctionnel (Fi) dudit objet connecté ;
- un module de chiffrement (SEC) d'une clé de chiffrement du groupe (KGRi) pour ledit groupe à l'aide de d'une clé de chiffrement de l'objet (KOi)
- un module de transmission (COMM) audit au moins un objet (Oi) connecté
- d'un identifiant du groupe (IDGRi),
- et de la clé de chiffrement (KGRi) du groupe chiffrée ({KGRi}_{KOi}).

9. Objet client (Oi) d'un réseau de communication, ledit objet étant **caractérisé en ce qu'**il comporte les modules suivants :
- un module de réception (COMM) d'un identifiant d'un groupe associé à au moins une fonction (Fi) dudit objet et d'une clé de chiffrement du groupe ;
- un module de déchiffrement (CAPP(S)) d'une clé de chiffrement du groupe à l'aide de la clé de chiffrement de l'objet ;
- un module de chiffrement d'un message et/ou de déchiffrement (CAPP(S)) d'un message reçu chiffré, à l'aide de la clé de chiffrement du groupe déchiffrée.

10. Passerelle domestique (2, 2') comprenant un objet serveur selon la revendication 8.

11. Système de gestion d'objets connectés dans un réseau local comprenant :
- au moins un objet client connecté selon la revendication 9 ;
- au moins un objet serveur selon la revendication 8.

12. Programme d'ordinateur apte à être mis en oeuvre sur un objet serveur selon la revendication 8, le programme comprenant des instructions de code qui, lorsque le programme est exécuté par un processeur, réalise les étapes du procédé défini selon la revendication 1.

13. Programme d'ordinateur apte à être mis en oeuvre sur un objet client selon la revendication 9, le programme comprenant des instructions de code qui, lorsque le programme est exécuté par un processeur, réalise les étapes du procédé défini selon la revendication 7.

## Patentansprüche

1. Verfahren zur Verwaltung einer Gruppe (Gi) verbundener Objekte (Oi), Client-Objekte genannt, in einem Kommunikationsnetz, das mindestens ein lokales Netz (1) enthält, wobei das Verfahren **dadurch gekennzeichnet ist, dass** es die folgenden Schritte aufweist:
- Zuweisung (E2, E65) zur Gruppe (Gi) mindestens eines verbundenen Objekts (Oi) abhängig von mindestens einem funktionalen Attribut (Fi) des verbundenen Objekts;
- Verschlüsselung (E72) eines Verschlüsselungsschlüssels der Gruppe (KGRi) für die Gruppe (Gi) mit Hilfe eines Verschlüsselungsschlüssels (KOi) des Objekts;
- Übertragung (E67) an das mindestens eine verbundene Objekt (Oi):
- einer Kennung der Gruppe (IDGRi),
- und des verschlüsselten ({KGRi}_{KOi}) Verschlüsselungsschlüssels der Gruppe (KGRi).

2. Verfahren zur Verwaltung einer Gruppe nach Anspruch 1, **dadurch gekennzeichnet, dass** die Zuweisung (E2) zur Gruppe (Gi) des mindestens einen verbundenen Objekts (Oi) von mindestens einer Funktion (Fi) der Gruppe (Gi) abhängt.

3. Verfahren zur Verwaltung einer Gruppe (Gi) nach Anspruch 1, **dadurch gekennzeichnet, dass** das lokale Netz ein verbundenes Objekt vom Typ Server, Server-Objekt genannt, enthält, das fähig ist, den Gruppenverschlüsselungsschlüssel (KGRi) zu generieren und zu speichern (E24).

4. Verfahren zur Verwaltung einer Gruppe (Gi) nach Anspruch 3, **dadurch gekennzeichnet, dass** das Kommunikationsnetz mindestens zwei lokale Netze (1, 1') enthält, und dass ein erstes Server-Objekt (O2) eines ersten lokalen Netzes (1) fähig ist, mit einem zweiten Server-Objekt (O'2) eines zweiten lokalen Netzes (1') zu kommunizieren, und das Verfahren die folgenden Schritte aufweist:
• Aufbau einer Kommunikation zwischen dem ersten (O2) und dem zweiten (O'2) Server-Objekt;
• Empfang, vom zweiten Server-Objekt (O'2), eines verschlüsselten ({KGRi}_{KOi}) Verschlüsselungsschlüssels (KGRi) und der Kennung (IDGRi) einer Gruppe des ersten Server-Objekts (O2);
• Kommunikation von Daten zwischen dem ersten Server-Objekt (O2) und dem zweiten Server-Objekt (O2'), um eine gesicherte Kommunikation zwischen einem ersten Objekt (Oi) des ersten lokalen Netzes und einem zweiten Objekt (Oi') des zweiten lokalen Netzes aufzubauen.

5. Verfahren zur Verwaltung einer Gruppe (Gi) nach Anspruch 1, **dadurch gekennzeichnet, dass** die Client-Objekte (Oi) des lokalen Netzes zu mindestens einer Gruppe (G0, Gi) von Objekten gehören.

6. Verfahren zur Verwaltung einer Gruppe (Gi) nach Anspruch 1, **dadurch gekennzeichnet, dass** die Client-Objekte des lokales Netzes einer Standardgruppe (G0) des lokalen Netzes zugewiesen sind.

7. Kommunikationsverfahren in einer Gruppe mindestens eines verbundenen Objekts (Oi), Client-Objekt genannt, in einem Kommunikationsnetz, wobei das Verfahren **dadurch gekennzeichnet ist, dass** es die folgenden Schritte auf einem Client-Objekt (Oi) aufweist:
- Empfang (E55) einer Kennung einer Gruppe (IDGRi), die mindestens einer Funktion (Fi) des Client-Objekts zugeordnet ist, und eines verschlüsselten Verschlüsselungsschlüssels der Gruppe;
- Entschlüsselung (E43) des verschlüsselten Verschlüsselungsschlüssels der Gruppe (KGRi) mit Hilfe eines Verschlüsselungsschlüssels (KOi) des Client-Objekts;
- Verschlüsselung einer Nachricht und/oder Entschlüsselung einer empfangenen verschlüsselten Nachricht (M), mit Hilfe des entschlüsselten Verschlüsselungsschlüssels der Gruppe (KGRi).

8. Server-Objekt (O2) zur Bildung einer Gruppe (Gi) mindestens eines verbundenen Objekts, Client-Objekt genannt, in einem Kommunikationsnetz (1, 3), das mindestens ein lokales Netz enthält, wobei das Server-Objekt **dadurch gekennzeichnet ist, dass** es die folgenden Module aufweist:
- ein Zuweisungsmodul (SAPP(S)) zur Gruppe (Gi) mindestens eines verbundenen Objekts (Oi) abhängig vom mindestens einem funktionalen Attribut (Fi) des verbundenen Objekts;
- ein Verschlüsselungsmodul (SEC) eines Verschlüsselungsschlüssels der Gruppe (KGRi) für die Gruppe mit Hilfe eines Verschlüsselungsschlüssels (KOi) des Objekts
- ein Übertragungsmodul (COMM) an das mindestens eine verbundene Objekt (Oi)
- einer Kennung der Gruppe (IDGRi),
- und des verschlüsselten ({KGRi}_{KOi}) Verschlüsselungsschlüssels der Gruppe (KGRi).

9. Client-Objekt (Oi) eines Kommunikationsnetzes, wobei das Objekt **dadurch gekennzeichnet ist, dass** es die folgenden Module aufweist:
- ein Empfangsmodul (COMM) einer Kennung einer Gruppe, die mindestens einer Funktion (Fi) des Objekts zugeordnet ist, und eines Verschlüsselungsschlüssels der Gruppe;
- ein Entschlüsselungsmodul (CAPP(S)) eines Verschlüsselungsschlüssels der Gruppe mit Hilfe des Verschlüsselungsschlüssels des Objekts;
- ein Modul der Verschlüsselung einer Nachricht und/oder der Entschlüsselung (CAPP(S)) einer verschlüsselten empfangenen Nachricht, mit Hilfe des entschlüsselten Verschlüsselungsschlüssels der Gruppe.

10. Heim-Gateway (2, 2'), das ein Server-Objekt nach Anspruch 8 enthält.

11. Verwaltungssystem verbundener Objekte in einem lokalen Netz, das enthält:
- mindestens ein verbundenes Client-Objekt nach Anspruch 9;
- mindestens ein Server-Objekt nach Anspruch 8.

12. Computerprogramm, das fähig ist, auf einem Server-Objekt nach Anspruch 8 durchgeführt zu werden, wobei das Programm Codeanweisungen enthält, die, wenn das Programm von einem Prozessor ausgeführt wird, die Schritte des nach Anspruch 1 definierten Verfahrens realisiert.

13. Computerprogramm, das fähig ist, auf einem Client-Objekt nach Anspruch 9 durchgeführt zu werden, wobei das Programm Codeanweisungen enthält, die, wenn das Programm von einem Prozessor ausgeführt wird, die Schritte des nach Anspruch 7 definierten Verfahrens realisiert.

## Claims

1. Method for managing a group (Gi) of connected objects (Oi), referred to as client objects, in a communications network comprising at least one local area network (1), said method being **characterized in that** it comprises the following steps:
- assigning (E2, E65) at least one connected object (Oi) to the group (Gi) on the basis of at least one functional attribute (Fi) of said connected object;
- encrypting (E72) a group encryption key (KGRi) for said group (Gi) using an object encryption key (KOi);
- transmitting (E67), to said at least one connected object (Oi):
- a group identifier (IDGRi),
- and the encrypted group encryption key ({KGRi}_{KOi}).

2. Method for managing a group according to Claim 1, **characterized in that** said at least one connected object (Oi) is assigned (E2) to the group (Gi) on the basis of at least one function (Fi) of the group (Gi).

3. Method for managing a group (Gi) according to Claim 1, **characterized in that** the local area network comprises a connected object of server type, referred to as a server object, which is able to generate and store (E24) the group encryption key (KGRi).

4. Method for managing a group (Gi) according to Claim 3, **characterized in that** the communications network comprises at least two local area networks (1, 1') and **in that** a first server object (O2) of a first local area network (1) is able to communicate with a second server object (O'2) of a second local area network (1') and the method comprises the following steps:
• establishing communication between the first server object (O2) and the second server object (O'2);
• receiving, by the second server object (O'2,) an encrypted encryption key ({KGRi}_{KOi}) and the group identifier (IDGRi) of the first server object (O2);
• communicating data between the first server object (O2) and the second server object (O2') in order to establish a secure communication between a first object (Oi) of the first local area network and a second object (Oi') of the second local area network.

5. Method for managing a group (Gi) according to Claim 1, **characterized in that** the client objects (Oi) of the local area network belong to at least one group (G0, Gi) of objects.

6. Method for managing a group (Gi) according to Claim 1, **characterized in that** the client objects of the local area network are assigned to a default group (G0) of said local area network.

7. Method for communicating in a group of at least one connected object (Oi), referred to as a client object, in a communications network, said method being **characterized in that** it comprises the following steps on a client object (Oi):
- receiving (E55) a group identifier (IDGRi) associated with at least one function (Fi) of said client object and an encrypted group encryption key;
- decrypting (E43) the encrypted group encryption key (KGRi), using a client object encryption key (KOi);
- encrypting a message and/or decrypting a received encrypted message (M), using the decrypted group encryption key (KGRi).

8. Server object (O2) for forming a group (Gi) of at least one connected object, referred to as a client object, in a communications network (1, 3) comprising at least one local area network, said server object being **characterized in that** it comprises the following modules:
- a module (SAPP(S)) for assigning at least one connected object (Oi) to the group (Gi) on the basis of at least one functional attribute (Fi) of said connected object;
- a module (SEC) for encrypting a group encryption key (KGRi) for said group using an object encryption key (KOi);
- a module (COMM) for transmitting, to said at least one connected object (Oi):
- a group identifier (IDGRi),
- and the encrypted group encryption key ({KGRi}_{KOi}).

9. Client object (Oi) of a communication network, said object being **characterized in that** it comprises the following modules:
- a module (COMM) for receiving a group identifier associated with at least one function (Fi) of said object and a group encryption key;
- a module (CAPP(S)) for decrypting a group encryption key using the object encryption key;
- a module for encrypting a message and/or for decrypting an encrypted received message, using the decrypted group encryption key.

10. Home gateway (2, 2') comprising a server object according to Claim 8.

11. System for managing connected objects in a local area network comprising:
- at least one connected client object according to Claim 9;
- at least one server object according to Claim 8.

12. Computer program which is able to be implemented on a server object according to Claim 8, the program comprising code instructions which, when the program is executed by a processor, carries out the steps of the method which is defined in Claim 1.

13. Computer program which is able to be implemented on a client object according to Claim 9, the program comprising code instructions which, when the program is executed by a processor, carries out the steps of the method which is defined in Claim 7.
